(19) Europäisches Patentamt
European Patent Office
Office européen des brevets

(11) Veröffentlichungsnummer: **0 124 643**
**A2**

(12) **EUROPÄISCHE PATENTANMELDUNG**

(21) Anmeldenummer: **83110807.1**

(22) Anmeldetag: **28.10.83**

(51) Int. Cl.³: **F 16 C 27/06**
F 16 C 33/78

(30) Priorität: **05.05.83 DE 3316409**

(43) Veröffentlichungstag der Anmeldung:
**14.11.84 Patentblatt 84/46**

(84) Benannte Vertragsstaaten:
**AT BE CH DE FR GB IT LI LU NL SE**

(71) Anmelder: **Firma Carl Freudenberg**
**Höhnerweg 2**
**D-6940 Weinheim/Bergstrasse(DE)**

(72) Erfinder: **Hölzer, Helmut**
**Hegelstrasse 15**
**D-6940 Weinheim(DE)**

(74) Vertreter: **Weissenfeld-Richters, Helga, Dr.**
**Höhnerweg 2**
**D-6940 Weinheim/Bergstrasse(DE)**

(54) **Radialwälzlager.**

(57) Radialwälzlager, bei dem der Innenring auf dem Mittelschenkel des U-förmigen Profils einer Ringdichtung gelagert ist und bei dem die stirnseitigen Schenkel des Profils der Ringdichtung den Innenring und den die Wälzkörper enthaltenden Zwischenraum zum Außenring beiderseits umschließen, wobei die Ringdichtung aus gummielastischem Werkstoff besteht, wobei der Mittelschenkel zu einer Dämpfungsschicht verdickt ist und wobei die stirnseitigen Schenkel an den axialen Begrenzungsflächen des Außenringes anliegen.

*FIG. 1*

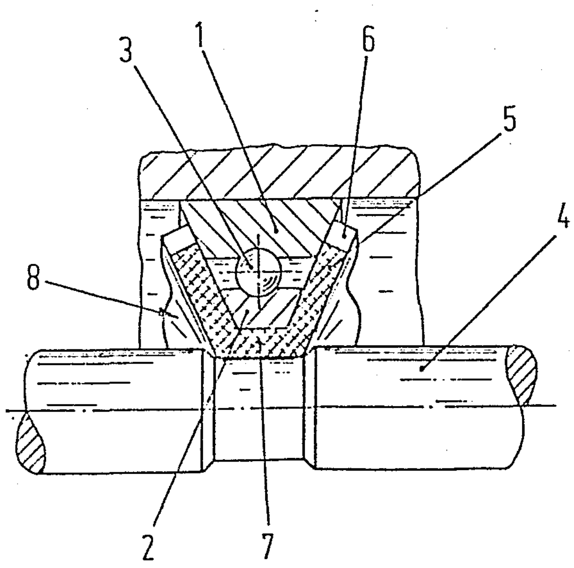


EP 0 124 643 A2

0124643



Anmelderin: Firma Carl Freudenberg, Weinheim

## Radialwälzlager

Die Erfindung betrifft ein Radialwälzlager, bei dem der Innenring auf dem Mittelschenkel des U-förmigen Profils einer Ringdichtung gelagert ist und bei dem die stirnseitigen Schenkel des Profils der Ringdichtung den Innenring und den die Wälzkörper enthaltenden Zwischenraum zum Außenring beiderseits umschließen.

Ein solches Radialwälzlager wird in der deutschen Gebrauchsmusterschrift 72 17 904 beschrieben. Die Ringdichtung besteht aus Stahlblech und dient primär der axialen Zusammenfassung des zweiteilig ausgebildeten Innenringes. Ihre Flexibilität ist dementsprechend gering und hat zur Folge, daß bei einer schleifenden Berührung des Außenringes neben starkem Verschleiß eine große Beeinträchtigung der Leichtgängigkeit der Lagerung in Kauf genommen werden muß. Eine nicht schleifende Zuordnung der stirnseitigen Schenkel des Profils des Dichtringes zu dem Außenring ist ebenfalls möglich. In diesem Falle kommt es jedoch zwischen beiden Teilen zur Ausbildung eines Spaltes, durch den Verunreinigungen in das Innere des Radialwälzlagers einzudringen vermögen.

Bei Wälzlagern nach der deutschen Gebrauchsmusterschrift 72 17 904 ist außerdem eine metallische Verbindung zwischen der gelagerten Welle und dem den Außenring berührenden Maschinenteil vorhanden. Hierdurch können störende Schwingungen übertragen werden, was nicht erwünscht ist.

Der Erfindung liegt die Aufgabe zugrunde, ein Radialwälzlager der vorstehend genannten Art derart weiter zu entwickeln, daß die genannten Nachteile nicht mehr auftreten. Neben einer guten Leichtgängigkeit und Abdichtung des die Wälzkörper enthaltenden Zwischenraumes soll gewährleistet sein, daß störende Schwingungen nicht mehr von der gelagerten Welle auf das an den Außenring angrenzende Maschinenteil übertragen werden können.

Diese Aufgabe wird erfindungsgemäß mit den kennzeichnenden Merkmalen des Patentanspruchs 1 gelöst. Auf vorteilhafte Ausgestaltungen nehmen die Unteransprüche Bezug.

0124643

Das erfindungsgemäß vorgeschlagene Radialwälzlager ist dadurch gekennzeichnet, daß die Ringdichtung aus gummielastischem Werkstoff besteht, daß der Mittelschenkel zu einer Dämpfungsschicht verdickt ist und daß die stirnseitigen Schenkel der Ringdichtung an den axialen Begrenzungsflächen des Außenringes anliegen. Die mit der gelagerten Welle umlaufende Ringdichtung hat ein in radialer Richtung nach innen und in axialer Richtung nach außen durchgehend geschlossenes Profil, in dem sich durch die betriebsbedingt auftretenden Fliehkräfte ein gewisses Vakuum aufbaut. Dieses Vakuum hat unter Betriebsbedingungen eine zusätzliche Anpressung der stirnseitigen Schenkel an die axialen Begrenzungsflächen des Außenringes zur Folge. Unter Betriebsbedingungen vermögen dadurch Verschmutzungen nicht in den Zwischenraum zwischen Außen- und Innenring einzudringen. Bei Wellenstillstand ist eine entsprechende Gefahr ohnehin außerordentlich gering.

Der Mittelschenkel des U-förmigen Profils der Ringdichtung ist bei der vorgeschlagenen Ausführung zu einer Dämpfungsschicht verdickt. Störende Schwingungen der Welle und/oder des an den Außenring angrenzenden Maschinenteiles werden hiervon absorbiert und vermögen sich nicht mehr gegenseitig zu verstärken. Insbesondere in bezug auf die Geräuschentwicklung in Getrieben ist dieser Effekt von einer hervorzuhebenden Bedeutung.

Der Effekt läßt sich durch die Dimensionierung und Formgebung des Mittelschenkels optimieren sowie durch die Wahl eines geeigneten Werkstoffes für die Herstellung der Ringdichtung. Neben Gummi können vor allem elastomere Polyurethane gut verwendet werden, beispielsweise solche einer Härte Shore A von 45 bis 85.

Die Erzielung eines guten Dämpfungseffektes setzt voraus, daß die Dämpfungsschicht bei Einleitung von Schwingungen in Freiräume auszuweichen vermag. Es ist dementsprechend an sich wünschenswert, die Dämpfungsschicht in sich möglichst nachgiebig auszubilden, was jedoch dem Wunsch nach einer möglichst präzisen Führung der gelagerten Welle zuwiderläuft. Zwischen beiden Forderungen ist daher ein Kompromiß zu bilden, der doch ohne große Schwierigkeiten realisiert werden kann, indem die Dämpfungsschicht auf der Außen- und/ oder auf der Innenseite gleichmäßig verteilte Vorsprünge aufweist, die in radialer Richtung vorspringen und die gegebenenfalls durch sich in Längs- und/oder Umfangsrichtung erstreckende Rippen gebildet werden. Die Nachgiebigkeit der Dämpfungsschicht ist in diesem Falle auf einen Teil der radialen Erstreckung der Vorsprünge begrenzt und zeichnet sich durch eine starke Progressivität aus. Die radialen Verlagerungen der Welle können dadurch auf einem tolerierbaren Bereich begrenzt werden. Beispielsweise in Getrieben lassen sich dadurch große Drehmomente übertragen, ohne daß das Abrollgeräusch der Zahnräder störend in Erscheinung tritt. In Abhängigkeit von den gestellten Anforderungen ist dadurch gegebenenfalls auch die Wahl einer vereinfachten Verzahnung möglich, beispielsweise einer Geradverzahnung anstelle einer Schrägverzahnung. Hieraus resultieren wirtschaftliche Vorteile. Die Dämpfung der Spitzenbelastungen führt außerdem zu vermindertem Verschleiß.

Das vorgeschlagene Radialwälzlager enthält bevorzugt eine Dauerschmierung. Es ist aus diesem Grunde nicht erwünscht, daß fremde Schmierstoffe in den Zwischenraum zwischen Außen- und Innenring einzudringen vermögen. Der unter diesem Gesichtspunkt erwünschte Abdichtungseffekt läßt sich verstärken, indem die axialen Begrenzungsflächen des Außenringes und/oder die diesem zugewandten Flächen der stirnseitigen Schenkel der Ringdichtung mit hydrodynamisch wirkenden Rückförderelementen versehen werden. Entsprechende Rückförderelemente sind auf dem Dichtungsgebiet seit langem bekannt. Sie können durch mindestens eine Rippe oder Nute gebildet werden, die in ihrem Verlauf einen veränderlichen Abstand von der Rotationsachse aufweist und die dadurch geeignet ist, in den Dichtspalt eingedrungene Fremdstoffe zurück in den abgedichteten Raum zu fördern.

Die stirnseitigen Schenkel der Ringdichtung können auch auf der Außenseite durch sich in radialer und axialer Richtung erstreckende Vorsprünge begrenzt werden, die mindestens eine achsparallel verlaufende Begrenzungsfläche haben. Die äußere Begrenzungsfläche der stirnseitigen Schenkel kann in einem solchen Falle beispielsweise durch eine sich in Umfangsrichtung erstreckende Wellung gebildet werden.

Der Gegenstand der vorliegenden Erfindung wird nachfolgend anhand der in der Anlage beigefügten Zeichnung weiter erläutert. Es zeigen:

Figur 1 ein Radialwälzlager in halbgeschnittener Darstellung.

Figur 2 das Radialwälzlager nach Figur 1 in der Vorderansicht.

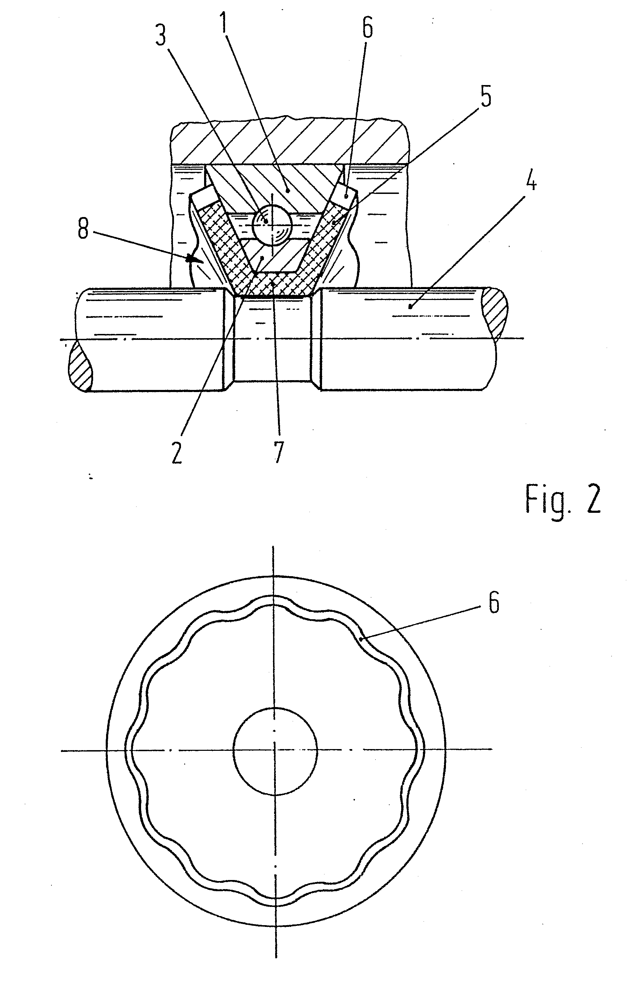

Das in Figur 1 gezeigte Radialwälzlager besteht aus dem Außenring 1, dem Innenring 2 und den dazwischen angeordneten Wälzkörpern 3. Letztere haben eine kugelförmige Gestalt und sind gleichmäßig auf dem Umfang verteilt.

Innenring und Außenring haben ein kegelig nach außen erweitertes Profil. Der zwischen den Stirnflächen eingeschlossene Winkel umfaßt 30°.

Zwischen dem Innenring 2 und der gelagerten Welle 4 ist die Dämpfungsschicht 7 der Ringdichtung 8 angeordnet. Diese besteht aus gummielastischem Werkstoff mit einer Härte Shore A 78.

Die Ringdichtung hat ein V-förmig nach außen geöffnetes Profil und liegt in den stirnseitigen Flanschen ebenflächig an den axialen Begrenzungsflächen des Innen- und des Außenringes an. Die Flansche weisen auf dem Außenumfang eine gleichmäßig in Umfangsrichtung verteilte Wellung auf, wodurch in den Dichtspalt zwischen den Flanschen und dem Außenring eindringende Fremdstoffe bei Drehung der Welle nach außen abgeschleudert werden. Zugleich entsteht im Innenraum des Radialwälzlagers ein gewisses Vakuum, wodurch die Anpressung der Flansche 5 an die axialen Begrenzungsflächen des Innen- und des Außenringes eine Vergrößerung erfährt.

Figur 2 zeigt die Wellung des Außenumfanges der Flansche 5 in vergrößertem Maßstab. Sie kann gegebenenfalls auch durch einzelne Erhebungen ersetzt werden, die einen Abstand voneinander haben.

Ansprüche:

1. Radialwälzlager, bei dem der Innenring auf dem Mittelschenkel des U-förmigen Profils einer Ringdichtung gelagert ist und bei dem die stirnseitigen Schenkel des Profils der Ringdichtung den Innenring und den die Wälzkörper enthaltenden Zwischenraum zum Außenring beiderseits umschließen, dadurch gekennzeichnet, daß die Ringdichtung (8) aus gummielastischem Werkstoff besteht, daß der Mittelschenkel (7) zu einer Dämpfungsschicht verdickt ist und daß die stirnseitigen Schenkel (5) an den axialen Begrenzungsflächen des Außenringes (1) anliegen.

2. Radialwälzlager nach Anspruch 1, dadurch gekennzeichnet, daß die Dämpfungsschicht (7) auf der Außen- und/oder Innenseite gleichmäßig verteilte Vorsprünge aufweist, die in radialer Richtung vorspringen.

3. Radialwälzlager nach Anspruch 2, dadurch gekennzeichnet, daß die Vorsprünge durch sich in Längs- und/oder Umfangsrichtung erstreckende Rippen gebildet werden.

4. Radialwälzlager nach Anspruch 1 bis 3, dadurch gekennzeichnet, daß die axialen Begrenzungsflächen des Außenringes (1) und/oder die diesen zugewandten Flächen der stirnseitigen Schenkel (5) der Ringdichtung mit hydrodynamischen Rückförderelementen (6) für eingedrungene Fremdstoffe versehen sind.

5. Radialwälzlager nach Anspruch 4, dadurch gekennzeichnet, daß die Rückförderelemente (6) durch mindestens eine Rippe oder Nut gebildet werden, die in ihrem Verlauf einen veränderlichen Abstand von der Rotationsachse aufweist.

6. Radialwälzlager nach Anspruch 1 bis 5, dadurch gekennzeichnet, daß die stirnseitigen Schenkel der Ringdichtung durch sich in radialer und axialer Richtung erstreckende Vorspringe begrenzt sind.

7. Radialwälzlager nach Anspruch 6, dadurch gekennzeichnet, daß die Vorsprünge mindestens eine achsparallel verlaufende Begrenzungsfläche haben.

-1/1

0124643

Fig. 1

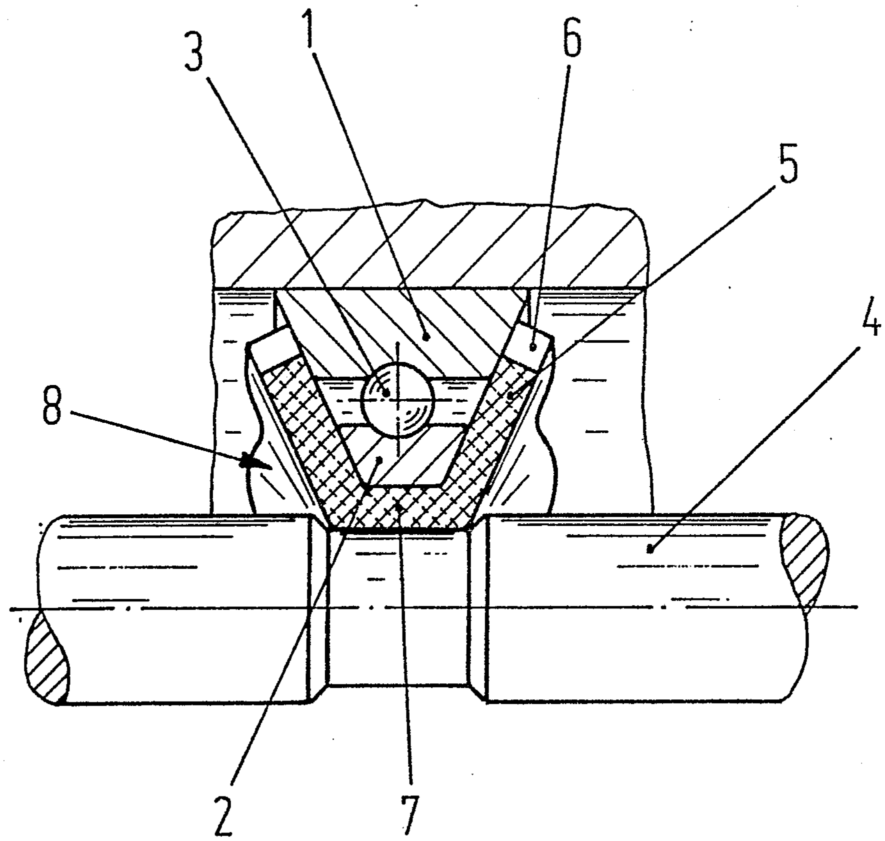


Fig. 2